# FASCICULE DE BREVET EUROPEEN

(11) **EP 1 013 867 B1**
(45) Date de publication et mention de la délivrance du brevet: **24.09.2003**
(21) Numéro de dépôt: 99403220.9
(22) Date de dépôt: 20.12.1999
(51) Int. Cl.: E05F 11/48, B60J 5/04, F16B 19/10

(54) **Module de porte de véhicule et son système de fixation d'un rail de lève-vitre**
Kraftfahrzeugtürmodul und dessen Befestigungssystem einer Führungsschiene für Fensterheber
Vehicle door module and its fixing system for a window regulator guiderail

(30) Priorité: 21.12.1998 FR 9816136
(43) Date de publication de la demande: 28.06.2000
(73) Titulaire: ArvinMeritor Light Vehicle Systems-France, 45600 Sully sur Loire (FR)
(72) Inventeur: Mercier, Jacky, 45460 Bonnee (FR)
(74) Mandataire: Jacobson, Claude

(56) Documents cités:
- DE-A- 19 528 467
- DE-A- 19 654 524
- FR-A- 2 548 295

## Description

La présente invention a pour objet un module de porte de véhicule, comprenant un panneau pourvu d'équipements dont au moins un rail de lève-vitre et des moyens de fixation du rail sur le panneau. Un tel module de porte est par exemple décrit dans le document DE-A-195 28 467.

Pour réaliser cette fixation on utilise classiquement un rivet creux dont une extrémité est constituée par une collerette tandis que l'autre extrémité forme une partie cylindrique avec un trou borgne. Après insertion de cette partie cylindrique dans le trou de passage dans le rail et dans la tôle constituant le panneau, la partie cylindrique est sertie sur la tôle par rivetage gyroscopique.

Malheureusement il se produit un jeu entre la tôle, le rail et le rivet car cette liaison est insuffisamment maîtrisée et suite aux claquements de la porte et aux efforts exercés par les câbles, la tôle peut subir des déchirements autour de son trou de réception du rivet. Pour y remédier et éviter le déchirement de la tôle, on ajoute une rondelle entre l'extrémité sertie de la partie cylindrique et la tôle.

Il en résulte une augmentation du coût du dispositif, lequel nécessite un entretien régulier et est de plus très difficile à assembler en série. Par ailleurs le temps de cycle nécessaire pour rabattre le rivet sur la tôle est élevé (de l'ordre de 9 secondes) et la maintenance de ce dispositif nécessite une formation spécifique des opérateurs.

Enfin le câble associé au rail se trouve disposé dans l'axe du rivet et de ce fait gêne l'opération de sertissage du rivet, car la partie à sertir se trouve pratiquement au contact du câble, lequel doit de ce fait être préalablement écarté pour permettre l'opération.

Pour remédier aux inconvénients ci-dessus du rivet utilisé jusqu'à présent, diverses solutions ont été envisagées. Ainsi il a été d'abord proposé de créer sur le rivet un collet rabattu pour améliorer la résistance de la tôle aux points de fixation. En fait cette solution s'est avérée techniquement irréalisable.

Il a également été envisagé d'augmenter l'épaisseur de la tôle, par exemple de 0,2mm, afin d'obtenir une tôle plus résistante au déchirement. Cette solution a également dû être écartée car trop onéreuse

On a aussi proposé d'ajouter de la colle entre le rivet et la tôle, afin de réduire les vibrations issues du claquement de porte et qui sont susceptibles de provoquer le déchirement de la tôle et du rivet. Cette solution a également dû être éliminée car elle posait un problème de fiabilité, était onéreuse et peu industrialisable.

Il a été imaginé de remplacer l'acier constitutif du rivet, par du « Zamak ». Cette solution a aussi été écartée car trop onéreuse et s'est révélée après essais comme ne donnant aucun résultat positif.

On a proposé de remplacer les rivets par des vis. Mais l'utilisation de vis impose des écrous supplémentaires dans la tôle et est trop onéreuse.

Enfin on a envisagé d'inverser le rivet, de façon que la collerette vienne se placer du côté de la tôle au lieu d'être du côté du rail, à l'intérieur de celui-ci. Mais cette solution n'a pu être retenue car elle s'est révélée techniquement irréalisable.

Une autre solution est décrite dans le document DE-A-196 54 524.

L'invention a pour but de proposer un système de fixation du rail au panneau ne présentant pas ces divers inconvénients et dont le coût soit nettement réduit. A cet effet, un module suivant l'invention est conforme à la revendication 1.

De préférence le rivet est disposé, avant l'opération de fixation, de telle sorte que la tête de la pointe et l'extrémité contiguë de la douille se trouve à l'intérieur du rail. Il en résulta que la traction exercée sur l'extrémité de la pointe s'effectue du côté du rail et de la tôle opposé au câble, lequel ne peut donc plus gêner le sertissage et par conséquent l'assemblage du rail et de la tôle.

Le coût de la pièce primaire constituée par un tel rivet n'est pas supérieur à celui des rivets utilisés jusqu'à présent, alors que par contre le coût de l'opération d'assemblage est considérablement diminué par réduction du temps nécessaire à un cycle d'assemblage. En effet avec un tel rivet, si l'on utilise un robot, le temps de cycle peut être divisé par 36, et par 9 s'il s'agit d'un système comportant autant de riveteuses gyroscopiques qu'il y a de rivets.

La diminution du coût de la fixation est donc extrêmement importante.

Ainsi, de nombreuses solutions ont été recherchées avant de parvenir à celle conforme à l'invention.

L'invention sera maintenant décrite en référence aux dessins annexés qui en illustrent un mode de réalisation à titre d'exemple non limitatif.

La figure 1 est une vue en élévation partielle d'un module de porte de véhicule équipé d'un lève-vitre comportant un rail fixé au panneau du module.

La figure 2 est une vue en coupe et élévation partielle d'un rivet pouvant être utilisé pour fixer le rail au panneau du module de la figure 1 conformément à l'invention, le rivet étant représenté avant l'opération d'assemblage.

La figure 3 est une vue en coupe suivant 3-3 de la figure 1 montrant l'état du rivet après insertion dans les trous du rail et de la tôle et exécution de l'assemblage.

La figure 4 est une vue en élévation et coupe partielle du module de porte de la figure 1 dont le panneau et le rail ont été assemblés au moyen d'un second mode de réalisation du rivet de fixation.

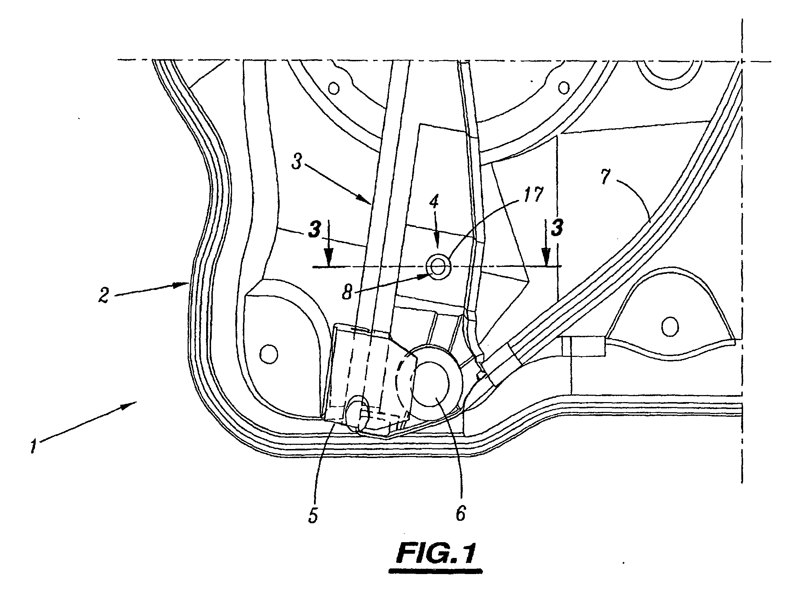

Le module 1 de porte de véhicule partiellement représenté à la figure 1 est destiné à être assemblé à un panneau intérieur de porte non représenté. Il comprend un panneau 2 pourvu de divers équipements (lève-vitre, serrure, moteur d'entraînement du lève-vitre, etc..) dont au moins un rail 3 de lève-vitre associé à un câble 10 (Fig.3) disposé dans une gaine 7, et des moyens de fixation du rail 3 sur le panneau 2, en des emplacements tels que 4 situés au voisinage de ses extrémités.

De manière connue en soi, le rail 3 est équipé d'un curseur 5 pouvant coulisser le long du rail et adapté pour supporter une vitre non représentée. A chaque extrémité du rail 3 est montée une poulie 6 de renvoi du câble 10 entraîné par les moyens d'actionnement du lève-vitre.

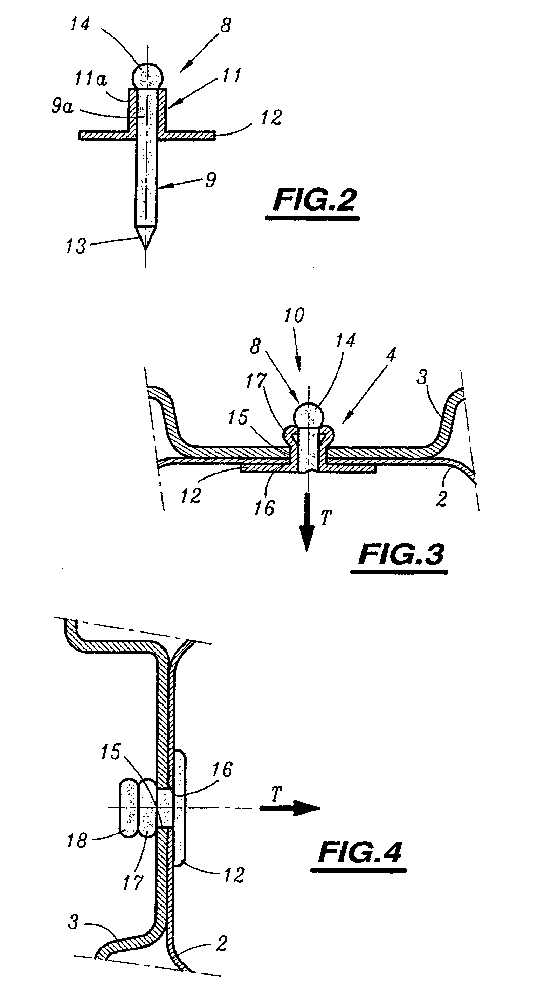

Les moyens de fixation du rail 3 sur la tôle constitutive du panneau 2 comprennent, pour chaque point 4 de fixation, un rivet 8 (figure 2) constitué d'une pointe 9 ayant une tête 14, et d'une douille cylindrique 11 enveloppant en la serrant une partie 9a de la tige de la pointe 9. La douille 11 se prolonge par une collerette radiale 12 monopièce avec la douille 11, laquelle est réalisée en une matière déformable telle que par exemple......

La pointe 9 peut comporter une extrémité effilée 13 et sa tête 14 dans l'exemple illustré aux figures 2 et 3, est constituée d'une portion de sphère qui déborde radialement au delà de la surface de la tige 9a. La douille 11 est dimensionnée et positionnée de manière que son extrémité libre 11a soit positionnée pratiquement à la base de la tête sphérique 14.

Deux trous coaxiaux 15, 16 sont ménagés respectivement dans le rail 3 et dans la tôle 2.

Le processus d'assemblage du rail 3 et de la tôle 3 au moyen d'un rivet 8 est le suivant.

On introduit le rivet 8 dans les trous 15, 16 du côté de la tôle 2 opposé au rail 3 et au câble 10, qui s'étend en vis à vis de l'emplacement de fixation 4, en plaçant d'abord la tête 14 et la douille 11 successivement dans les trous 16 et 15, jusqu'à ce que la collerette 12 viennent en appui sur la tôle 2. Ensuite on exerce sur la tige de la pointe 9 une traction axiale T, tout en maintenant la collerette 12 appliquée contre la tôle 2. afin de provoquer un écrasement de la partie cylindrique 11a de la douille 11 par la tête 14. La pointe 9 coulisse par conséquent dans les trous 15, 16 dans la direction de la force de traction T, en provoquant l'écrasement et le gonflement de la partie cylindrique 11a de la douille 11. Cette dernière forme ainsi, en fin de translation de la pointe 9, un bourrelet annulaire 17 coaxial à la tête 14 (figure 3).

Ce bourrelet 17 ainsi que la tête 14 maintiennent fermement la collerette 12 appliquée contre la tôle 2 et assurent un assemblage robuste du rail 3 et de la tôle 2, sans jeu.

La tête de la pointe 9 peut avoir une forme quelconque, dans la mesure où une traction axiale sur la pointe 9 applique cette tête sur l'extrémité de la douille 11 et provoque son écrasement.

Ainsi dans la réalisation de la figure 4, la tête 18 de la pointe est plate, avec un diamètre correspondant de préférence sensiblement à celui du bourrelet 17 obtenu après écrasement de la douille 11.

En fin d'assemblage, la tige de la pointe 9 est rompue au niveau de la collerette 12 et évacuée.

On constate que les efforts exercés par les manoeuvres du lève-vitre sur ce dispositif de fixation ne provoquent pas de déchirement de la tôle à partir de son trou 16, contrairement à ce qui était le cas avec les rivets utilisés jusqu'à présent, ce qui constitue un avantage important du système de fixation selon l'invention.

De plus, le câble 10 ne constitue plus une gêne, car toute l'opération d'assemblage se déroule du côté de la tôle 2 opposé au câble 10, c'est à dire du côté de la collerette 12.

Le coût du dispositif nécessaire pour exécuter la fixation d'un rail 3 au panneau 2 avec des rivets 8 est diminué dans une très large mesure par rapport au coût d'une série de riveteuses gyroscopiques, utilisées dans la technique antérieure. En effet comme déjà indiqué, le temps de cycle nécessaire pour la pose d'un rivet 8 est très inférieur à celui des rivets antérieurs.

Le rivet 8 pourrait être introduit en place avec sa collerette 12 située dans le rail 3 et sa tête 14 à l'extérieur de la tôle 2, c'est à dire en position inversée par rapport à celle de la figure 3. Mais la fixation serait alors gênée par la présence du câble 10 du côté de la collerette 12 et de la pointe 9.

## Revendications

1. Module (1) de porte de véhicule, comprenant un panneau (2) pourvu d'équipements dont au moins un rail (3) de lève-vitre et des moyens de fixation du rail sur le panneau, lesdits moyens comprenant au moins un rivet (8) constitué d'une pointe (9) et d'une douille cylindrique (11) enveloppant une partie (9a) de la pointe à partir de la base de sa tête (14), cette douille se prolongeant par une collerette radiale (12) et étant réalisée en une matière déformable de telle sorte que lorsque la pointe et sa douille traversent des trous (16, 15) du rail et du panneau, une traction (T) sur la pointe entraîne axialement sa tête (14) qui déforme la douille en un bourrelet (17) écrasé entre le rail ou le panneau, et la tête de la pointe,
**caractérisé en ce que** la tête (18) de la pointe (9) est plate et adaptée pour coopérer avec la douille (11) afin de l'écraser lorsque la traction axiale (T) exercée sur la pointe est suffisante.

2. Module selon la revendication 1, **caractérisé en ce que** le rivet (8) est disposé de manière que la tête (18) de la pointe (9) et l'extrémité contiguë de la douille (11) se trouvent à l'intérieur du rail (3), et viennent s'appliquer contre celui-ci avec écrasement de la douille par la tête en un bourrelet annulaire (17), tandis que la collerette (12) est appliquée contre le panneau (2), l'extrémité de la pointe dépassant de la collerette étant sectionnée.

3. Utilisation d'un rivet (8) du type comprenant une pointe (9) et une douille (11) enveloppant une partie (9a) de la pointe, cette douille se prolongeant par une collerette radiale (12) et étant réalisée en une matière déformable, la tête (18) de la pointe (9) étant plate et adaptée pour coopérer avec la douille (11) afin de l'écraser lorsque la traction axiale (T) exercée sur la pointe est suffisante, pour la fixation d'un rail( 3) d'un lève-vitre sur un panneau (2) d'un module (1) de porte de véhicule.

## Patentansprüche

1. Kraftfahrzeugtürmodul (1), umfassend eine Blende (2), die mit Ausstattungen versehen ist, unter anderem mit mindestens einer Fensterhebeschiene (3) und Mitteln zur Befestigung der Schiene auf der Blende, wobei diese Mittel mindestens eine Niete (8) umfassen, die von einem Stift (9) und einer zylindrischen Büchse (11) gebildet ist, die einen Teil (9a) des Stiftes von der Basis seines Kopfes (14) aus umgibt, wobei sich diese Büchse durch einen radialen Kragen (12) verlängert und aus einem verformbaren Material hergestellt ist, so dass, wenn der Stift und seine Büchse Löcher (16, 15) der Schiene und der Blende durchlaufen, ein Zug (T) am Stift axial seinen Kopf (14) antreibt, der die Büchse in eine Wulst (17) verformt, die zwischen der Schiene oder der Blende und dem Kopf des Stiftes eingeklemmt ist, **dadurch gekennzeichnet, dass** der Kopf (18) des Stiftes (9) flach und derart ausgeführt ist, daß er mit der Büchse (11) zusammenwirkt, um sie zusammenzudrücken, wenn der auf den Stift ausgeübte Axialzug (T) ausreichend ist.

2. Modul nach Anspruch 1, **dadurch gekennzeichnet**, das die Niete (8) derart angeordnet ist, dass sich der Kopf (18) des Stiftes (9) und das angrenzende Ende der Büchse (11) im Inneren der Schiene (3) befinden und sich an diese durch zusammendrücken der Büchse durch den Kopf zu einem ringförmigen Wulst (17) anlegen, während der Kragen (12) an die Blende (2) angelegt wird, wobei das Ende des Stiftes, das über den Kragen hinausragt, abgetrennt wird.

3. Verwendung einer Niete (8), umfassend einen Stift (9) und eine Büchse (11), die einen Teil (9a) des Stiftes umgibt, wobei sich diese Büchse durch einen radialen Kragen (12) verlängert und aus einem verformbaren Material hergestellt ist, wobei der Kopf (18) des Stiftes (9) flach und derart ausgeführt ist, daß er mit der Büchse (11) zusammenwirkt, um sie zusammenzudrücken, wenn der Axialzug (T), der auf den Stift ausgeübt wird, ausreichend ist, um die Befestigung einer Schiene (3) eines Fensterhebers auf einer Blende (2) eines Kraftfahrzeugtürmoduls (1) sicher zu stellen.

## Claims

1. Vehicle door module (1), comprising a panel (2) provided with equipment including a rail (3) for raising and lowering the window and means for fixing the rail to the panel, said means comprising at least one rivet (8) consisting of a point (9) and a cylindrical sleeve (11) surrounding part (9a) of the point starting from the base of its head (14), said sleeve being extended by a radial flange (12) and being made of a deformable material so that when the point and its sleeve pass through holes (16, 15) in the rail and the panel, traction (T) on the point pulls its head (14) along axially, which deforms the sleeve into a bead (17) compressed between the rail or panel and the head of the point, **characterised in that** the head of the point (9) is flat and adapted to co-operate with the sleeve (11) in order to compress it when the axial traction (T) exerted on the point is sufficient.

2. Module according to claim 1, **characterised in that** the rivet (8) is arranged so that the head (18) of the point (9) and the contiguous end of the sleeve (11) are located inside the rail (3), and come to bear on the latter, the sleeve being compressed by the head into an annular bead (17), while the flange (12) is pressed against the panel (2), the end of the point protruding from the flange being sectional.

3. Use of a rivet (8) of the type comprising a point (9) and a sleeve (11) surrounding part (9a) of the point, this sleeve being extended by a radial flange (12) and being made of a deformable material, the head of the point (9) being flat and adapted to co-operate with the sleeve (11) in order to compress it when the axial traction (T) exerted on the point is sufficient, for fixing a rail (3) of a window raising and lowering device to a panel (2) of a vehicle door module (1).
